(19) **Europäisches Patentamt European Patent Office Office européen des brevets**

(11) **EP 4 156 827 B1**

(12) **EUROPEAN PATENT SPECIFICATION**

(45) Date of publication and mention of the grant of the patent:
**11.02.2026 Bulletin 2026/07**

(21) Application number: **22180862.9**

(22) Date of filing: **24.06.2022**

(51) International Patent Classification (IPC):
*H04W 72/12* (2023.01)    *H04B 1/3827* (2015.01)
*G01S 7/00* (2006.01)    *G01S 7/02* (2006.01)
*H04W 52/28* (2009.01)    *H04W 52/36* (2009.01)

(52) Cooperative Patent Classification (CPC):
**H04B 1/3838; G01S 7/006; G01S 7/0235; H04W 52/283; H04W 52/367;** H04B 17/364

(54) **ELECTRONIC DEVICES WITH TIME DIVISION RADIO-FREQUENCY COMMUNICATION AND SENSING**

ELEKTRONISCHE VORRICHTUNGEN MIT ZEITMULTIPLEXER HOCHFREQUENZKOMMUNIKATION UND -ERFASSUNG

DISPOSITIFS ÉLECTRONIQUES AVEC COMMUNICATION ET DÉTECTION PAR RADIOFRÉQUENCE PAR DIVISION TEMPORELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.09.2021 US 202163247731 P**
**07.06.2022 US 202217834801**

(43) Date of publication of application:
**29.03.2023 Bulletin 2023/13**

(73) Proprietor: **Apple Inc.**
**Cupertino CA 95014 (US)**

(72) Inventors:
- **BEHNAMFAR, Firouz**
 **Los Gatos (US)**
- **MUCKE, Christian W**
 **Portimao (PT)**
- **SAMBHWANI, Sharad**
 **San Diego (US)**

(74) Representative: **Froud, Christopher Andrew**
**Withers & Rogers LLP**
**2 London Bridge**
**London SE1 9RA (GB)**

(56) References cited:
**WO-A1-2022/218671    WO-A1-2022/232961**
**US-A1- 2019 200 365    US-A1- 2020 029 345**

## Description

## Field

This disclosure relates generally to electronic devices and, more particularly, to electronic devices with wireless circuitry.

## Background

Electronic devices can be provided with wireless capabilities. An electronic device with wireless capabilities has wireless circuitry that includes one or more antennas. The wireless circuitry is used to perform communications using radio-frequency signals transmitted by the antennas.

Regulatory limits on radio-frequency energy exposure are typically applied to communications using radio-frequency signals. In some scenarios, the wireless circuitry is also used to perform sensing to detect the presence of external objects near the electronic device. If care is not taken, the sensing can undesirably interfere with the communications.

Further background information can be found in the following documents:

US 2019/200365 A1 which describes a method, computer readable-medium, and apparatus for exposure detection in millimeter wave wireless communication systems.

US 2020/029345 A1 which describes methods, systems, and devices used to perform calibration of a transceiver chain to maintain or improve operation of a device or comply with legal or protocol requirements.

## Summary

The invention is set out in the appended set of claims.

## Brief Description of the Drawings

FIG. 1 is a functional block diagram of an illustrative electronic device having a radio for performing wireless communications and for sensing the presence of external objects in accordance with some embodiments.

FIG. 2 is a flow chart of illustrative operations involved in controlling a radio to perform sensing operations while minimizing disruptions to wireless communications caused by the sensing operations in accordance with some embodiments.

FIG. 3 is a flow chart of illustrative operations involved in adjusting the timing of sensing operations based on network settings for wireless communications in accordance with some embodiments.

FIG. 4 is a timing diagram showing how illustrative sensing operations may be performed during a measurement gap transition period in accordance with some embodiments.

FIG. 5 is a timing diagram showing how illustrative sensing operations may be performed during the end of a connected mode discontinuous reception cycle in accordance with some embodiments.

FIG. 6 is a timing diagram showing how illustrative sensing operations may be performed at different times in a communications schedule without measurement gaps or connected mode discontinuous reception cycles in accordance with some embodiments.

FIG. 7 is a timing diagram showing how illustrative sensing operations may be adaptively scheduled relative to a nominal sensing period based on scheduled wireless communications in accordance with some embodiments.

FIG. 8 is a flow chart of illustrative operations involved in adaptively scheduling sensing operations relative to a nominal sensing period based on scheduled wireless communications in accordance with some embodiments.

## Detailed Description

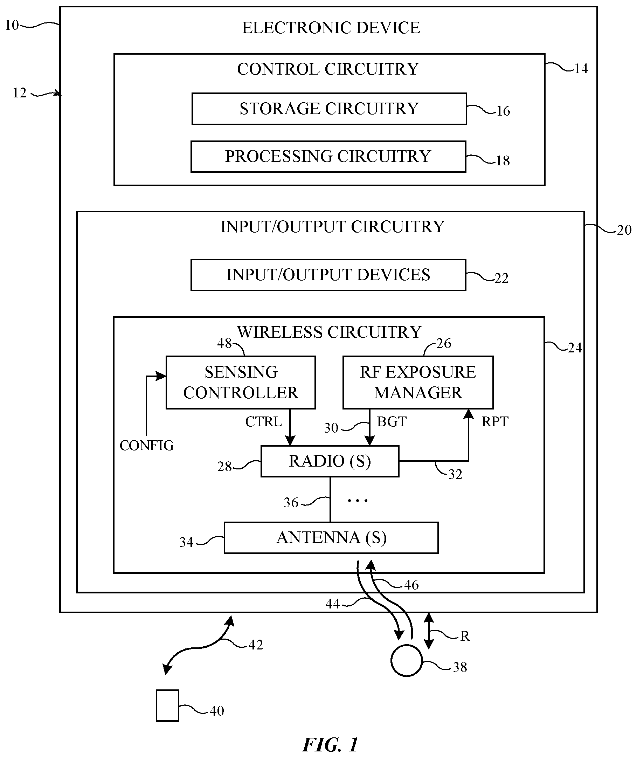

Electronic device 10 of FIG. 1 may be a computing device such as a laptop computer, a desktop computer, a computer monitor containing an embedded computer, a tablet computer, a cellular telephone, a media player, or other handheld or portable electronic device, a smaller device such as a wristwatch device, a pendant device, a headphone or earpiece device, a device embedded in eyeglasses or other equipment worn on a user's head, or other wearable or miniature device, a television, a computer display that does not contain an embedded computer, a gaming device, a navigation device, an embedded system such as a system in which electronic equipment with a display is mounted in a kiosk or automobile, a wireless internet-connected voice-controlled speaker, a home entertainment device, a remote control device, a gaming controller, a peripheral user input device, a wireless base station or access point, equipment that implements the functionality of two or more of these devices, or other electronic equipment.

As shown in the functional block diagram of FIG. 1, device 10 may include components located on or within an electronic device housing such as housing 12. Housing 12, which may sometimes be referred to as a case, may be formed of plastic, glass, ceramics, fiber composites, metal (e.g., stainless steel, aluminum, metal alloys, etc.), other suitable materials, or a combination of these materials. In some situations, parts or all of housing 12 may be formed from dielectric or other low-conductivity material (e.g., glass, ceramic, plastic, sapphire, etc.). In other situations, housing 12 or at least some of the structures that make up housing 12 may be formed from metal elements.

Device 10 may include control circuitry 14. Control circuitry 14 may include storage such as storage circuitry 16. Storage circuitry 16 may include hard disk drive storage, nonvolatile memory (e.g., flash memory or other electrically-programmable-read-only memory configured to form a solid-state drive), volatile memory (e.g., static or dynamic random-access-memory), etc. Storage circuitry 16 may include storage that is integrated within device 10 and/or removable storage media.

Control circuitry 14 may include processing circuitry such as processing circuitry 18. Processing circuitry 18 may be used to control the operation of device 10. Processing circuitry 18 may include on one or more microprocessors, microcontrollers, digital signal processors, host processors, baseband processor integrated circuits, application specific integrated circuits, central processing units (CPUs), etc. Control circuitry 14 may be configured to perform operations in device 10 using hardware (e.g., dedicated hardware or circuitry), firmware, and/or software. Software code for performing operations in device 10 may be stored on storage circuitry 16 (e.g., storage circuitry 16 may include non-transitory (tangible) computer readable storage media that stores the software code). The software code may sometimes be referred to as program instructions, software, data, instructions, or code. Software code stored on storage circuitry 16 may be executed by processing circuitry 18.

Control circuitry 14 may be used to run software on device 10 such as satellite navigation applications, internet browsing applications, voice-over-internet-protocol (VOIP) telephone call applications, email applications, media playback applications, operating system functions, etc. To support interactions with external equipment, control circuitry 14 may be used in implementing communications protocols. Communications protocols that may be implemented using control circuitry 14 include internet protocols, wireless local area network (WLAN) protocols (e.g., IEEE 802.11 protocols - sometimes referred to as Wi-Fi®), protocols for other short-range wireless communications links such as the Bluetooth® protocol or other wireless personal area network (WPAN) protocols, IEEE 802.11ad protocols (e.g., ultra-wideband protocols), cellular telephone protocols (e.g., 3G protocols, 4G (LTE) protocols, 3GPP Fifth Generation (5G) New Radio (NR) protocols, etc.), antenna diversity protocols, satellite navigation system protocols (e.g., global positioning system (GPS) protocols, global navigation satellite system (GLONASS) protocols, etc.), antenna-based spatial ranging protocols (e.g., radar protocols), or any other desired communications protocols. Each communications protocol may be associated with a corresponding radio access technology (RAT) that specifies the physical connection methodology used in implementing the protocol.

Device 10 may include input-output circuitry 20. Input-output circuitry 20 may include input-output devices 22. Input-output devices 22 may be used to allow data to be supplied to device 10 and to allow data to be provided from device 10 to external devices. Input-output devices 22 may include user interface devices, data port devices, and other input-output components. For example, input-output devices 22 may include touch sensors, displays (e.g., touch-sensitive and/or force-sensitive displays), light-emitting components such as displays without touch sensor capabilities, buttons (mechanical, capacitive, optical, etc.), scrolling wheels, touch pads, key pads, keyboards, microphones, cameras, buttons, speakers, status indicators, audio jacks and other audio port components, digital data port devices, motion sensors (accelerometers, gyroscopes, and/or compasses that detect motion), capacitance sensors, proximity sensors, magnetic sensors, force sensors (e.g., force sensors coupled to a display to detect pressure applied to the display), temperature sensors, etc. In some configurations, keyboards, headphones, displays, pointing devices such as trackpads, mice, and joysticks, and other input-output devices may be coupled to device 10 using wired or wireless connections (e.g., some of input-output devices 22 may be peripherals that are coupled to a main processing unit or other portion of device 10 via a wired or wireless link).

Input-output circuitry 20 may include wireless circuitry 24 to support wireless communications and/or radio-based spatial ranging operations. Wireless circuitry 24 may include one or more antennas 34. Wireless circuitry 24 may also include one or more radios 28. Each radio 28 may include circuitry that operates on signals at baseband frequencies (e.g., baseband circuitry), signal generator circuitry, modulation/demodulation circuitry (e.g., one or more modems), radio-frequency transceiver circuitry (e.g., radio-frequency transmitter circuitry, radio-frequency receiver circuitry, mixer circuitry for downconverting radio-frequency signals to baseband frequencies or intermediate frequencies between radio and baseband frequencies and/or for upconverting signals at baseband or intermediate frequencies to radio-frequencies, etc.), amplifier circuitry (e.g., one or more power amplifiers and/or one or more low-noise amplifiers (LNAs)), analog-to-digital converter (ADC) circuitry, digital-to-analog converter (DAC) circuitry, control paths, power supply paths, signal paths (e.g., radio-frequency transmission lines, intermediate frequency transmission lines, baseband signal lines, etc.), switching circuitry, filter circuitry, and/or any other circuitry for transmitting and/or receiving radio-frequency signals using antenna(s) 34. The components of each radio 28 may be mounted onto a respective substrate or integrated into a respective integrated circuit, chip, package, or system-on-chip (SOC). If desired, the components of multiple radios 28 may share a single substrate, integrated circuit, chip, package, or SOC.

Antenna(s) 34 may be formed using any desired antenna structures. For example, antenna(s) 34 may include antennas with resonating elements that are formed from loop antenna structures, patch antenna structures, inverted-F antenna structures, slot antenna structures, planar inverted-F antenna structures, helical antenna structures, monopole antennas, dipoles, hybrids of these designs, etc. Filter circuitry, switching circuitry, impedance matching circuitry, and/or other antenna tuning components may be adjusted to adjust the frequency response and wireless performance of antenna(s) 34 over time.

Transceiver circuitry in radios 28 may convey radio-frequency signals using one or more antennas 34 (e.g., antenna(s) 34 may convey the radio-frequency signals for the transceiver circuitry). The term "convey radio-frequency signals" as used herein means the transmission and/or reception of the radio-frequency signals (e.g., for performing unidirectional and/or bidirectional wireless communications with external wireless communications equipment). Antenna(s) 34 may transmit the radio-frequency signals by radiating the radio-frequency signals into free space (or to free space through intervening device structures such as a dielectric cover layer). Antenna(s) 34 may additionally or alternatively receive the radio-frequency signals from free space (e.g., through intervening devices structures such as a dielectric cover layer). The transmission and reception of radio-frequency signals by antenna(s) 34 each involve the excitation or resonance of antenna currents on an antenna resonating element in the antenna by the radio-frequency signals within the frequency band(s) of operation of the antenna.

Each radio 28 may be coupled to one or more antennas 34 over one or more radio-frequency transmission lines 36. Radio-frequency transmission lines 36 may include coaxial cables, microstrip transmission lines, strip line transmission lines, edge-coupled microstrip transmission lines, edge-coupled stripline transmission lines, transmission lines formed from combinations of transmission lines of these types, etc. Radio-frequency transmission lines 36 may be integrated into rigid and/or flexible printed circuit boards if desired. One or more radio-frequency lines 36 may be shared between radios 28 if desired. Radio-frequency front end (RFFE) modules may be interposed on one or more radio-frequency transmission lines 36. The radio-frequency front end modules may include substrates, integrated circuits, chips, or packages that are separate from radios 28 and may include filter circuitry, switching circuitry, amplifier circuitry, impedance matching circuitry, radio-frequency coupler circuitry, and/or any other desired radio-frequency circuitry for operating on the radio-frequency signals conveyed over radio-frequency transmission lines 36.

Radios 28 may use antenna(s) 34 to transmit and/or receive radio-frequency signals within different frequency bands at radio frequencies (sometimes referred to herein as communications bands or simply as a "bands"). The frequency bands handled by radios 28 may include wireless local area network (WLAN) frequency bands (e.g., Wi-Fi® (IEEE 802.11) or other WLAN communications bands) such as a 2.4 GHz WLAN band (e.g., from 2400 to 2480 MHz), a 5 GHz WLAN band (e.g., from 5180 to 5825 MHz), a Wi-Fi® 6E band (e.g., from 5925-7125 MHz), and/or other Wi-Fi® bands (e.g., from 1875-5160 MHz), wireless personal area network (WPAN) frequency bands such as the 2.4 GHz Bluetooth® band or other WPAN communications bands, cellular telephone frequency bands (e.g., bands from about 600 MHz to about 5 GHz, 3G bands, 4G LTE bands, 5G New Radio Frequency Range 1 (FR1) bands below 10 GHz, 5G New Radio Frequency Range 2 (FR2) bands between 20 and 60 GHz, etc.), other centimeter or millimeter wave frequency bands between 10-300 GHz, near-field communications frequency bands (e.g., at 13.56 MHz), satellite navigation frequency bands (e.g., a GPS band from 1565 to 1610 MHz, a Global Navigation Satellite System (GLONASS) band, a BeiDou Navigation Satellite System (BDS) band, etc.), ultra-wideband (UWB) frequency bands that operate under the IEEE 802.15.4 protocol and/or other ultra-wideband communications protocols, communications bands under the family of 3GPP wireless communications standards, communications bands under the IEEE 802.XX family of standards, and/or any other desired frequency bands of interest.

Each radio 28 may transmit and/or receive radio-frequency signals according to a respective radio access technology (RAT) that determines the physical connection methodology for the components in the corresponding radio. One or more radios 28 may implement multiple RATs if desired. Radios 28 may use antenna(s) 34 to transmit and/or receive radio-frequency signals 42 to convey wireless communications data between device 10 and external wireless communications equipment 40 (e.g., a wireless base station, a wireless access point, one or more other devices such as device 10, etc.). Implementations in which external wireless communications equipment 40 is a wireless base station are described herein as examples. External wireless communications equipment 40 may therefore sometimes be referred to herein as base station 40 or gNB 40. Wireless communications data may be conveyed by radios 28 and radio-frequency signals 42 bidirectionally (e.g., in an uplink (UL) direction from device 10 to base station 40 and in a downlink (DL) direction from base station 40 to device 10) or unidirectionally (e.g., in the UL or DL direction). The wireless communications data may, for example, include data that has been encoded into corresponding data packets such as wireless data associated with a telephone call, streaming media content, internet browsing, wireless data associated with software applications running on device 10, email messages, etc.

During radio-frequency signal transmission, some of the radio-frequency signals 42 transmitted by antenna(s) 34 may be incident upon external objects such as external object 38. External object 38 may be, for example, the body of the user of device 10 or another human or animal. In these scenarios, the amount of radio-frequency energy exposure at external object 38 may be characterized by one or more radio-frequency (RF) energy exposure metrics. The RF exposure (RFE) metrics may include specific absorption rate (SAR) for radio-frequency signals at frequencies less than 6 GHz (in units of W/kg), maximum permissible exposure (MPE) for radio-frequency signals at frequencies greater than 6 GHz (in units of mW/cm$^2$), and total exposure ratio (TER), which combines SAR and MPE.

Regulatory requirements often impose limits on the amount of RF energy exposure permissible for external object 38 within the vicinity of antenna(s) 34 over a specified time period (e.g., an SAR limit and an MPE limit over a corresponding averaging period). Such regulatory requirements may be imposed by the International Commission on Non-Ionizing Radiation Protection or by the United States' Federal Communications Commission (FCC), as examples. Wireless circuitry 24 may include RF exposure metric manager such as RF exposure manager 26 for ensuring that radios 28 comply with these regulatory requirements. The components of RF exposure manager 26 may be implemented in hardware (e.g., one or more processors, circuit components, logic gates, diodes, transistors, switches, arithmetic logic units (ALUs), registers, application-specific integrated circuits, field-programmable gate arrays, etc.) and/or software on device 10. RF exposure manager 26 may be coupled to each radio 28 over a respective control path 30.

RF exposure manager 26 may generate RF exposure budgets BGT for radios 28. RF exposure manager 26 may provide RFE budgets BGT to radios 28 over control paths 30. Each RFE budget BGT may include a corresponding SAR budget and/or a corresponding MPE budget (e.g., depending on whether the radio subject to that budget is subject to SAR and/or MPE limits). Each SAR budget may specify the amount of SAR that may be generated by the corresponding radio 28 in transmitting radio-frequency signals over the regulatory averaging period while still satisfying the overall SAR regulatory limits. Each MPE budget may specify the amount of MPE that may be generated by the corresponding radio 28 in transmitting radio-frequency signals over the regulatory averaging period while still satisfying the overall MPE regulatory limits. The circuitry in radios 28 may adjust the maximum transmit (TX) power level of its transmitted radio-frequency signals (e.g., using a maximum power reduction (MPR) command, etc.) to ensure that the RF exposure budget BGT for that radio remains satisfied over the averaging period.

In some scenarios, each radio or RAT in device 10 is assigned a fixed SAR/MPE budget, such that the distribution of the total available RF exposure budget across RATs remains static over time to meet the overall SAR/MPE regulatory limits on the operation of device 10 (e.g., over the averaging period). In these scenarios, each radio uses look-up tables to derive the maximum transmit power levels allowed for its fixed SAR/MPE budget and then maintains its transmit power level below that maximum transmit power level to satisfy the SAR/MPE limits. However, assigning static SAR/MPE budgets to the radios in this way without considering the radio needs for the current operating state/environment of device 10 results in sub-optimal budget distribution between the radios/RATs. For example, the part of the overall RF exposure budget that is not used by one radio cannot be re-assigned to another radio that may urgently need to transmit at a higher power level or increased duty cycle.

To mitigate these issues, RF exposure manager 26 may dynamically allocate SAR and MPE budgets to radios 28 over time (e.g., over the averaging period). RF exposure manager 26 may dynamically allocate SAR and MPE budgets to radios 28 based on feedback from radios 28. For example, as shown in FIG. 1, each radio 28 may be coupled to RF exposure manager 26 over feedback path 32. Each radio 28 may generate a SAR/MPE report RPT that identifies the amount of the assigned SAR and/or MPE budget that was consumed by that radio during different sub-periods of the averaging period. Radios 28 may send the SAR/MPE reports RPT to RF exposure manager 26 over feedback path 32. RF exposure manager 26 may generate updated RF exposure budgets BGT for radios 28 based on the received SAR/MPE reports RPT and based on the current or expected communication needs of device 10 to ensure that radios 28 can continue to transmit radio-frequency signals to meet the active and dynamic needs of device 10 while still satisfying the SAR and MPE limits imposed on device 10 over the averaging period. In this way, RF exposure manager 26 may assign SAR/MPE budgets across RATs while ensuring an SAR/MPE compliant overall RF exposure across the RATs.

In addition to conveying wireless communications data, wireless circuitry 24 may also use antennas 34 to perform radio-frequency sensing operations (sometimes referred to herein as spatial ranging operations, radio-based sensing operations, or simply as sensing operations). The sensing operations may allow device 10 to detect (e.g., sense or identify) the presence, location, orientation, and/or velocity (motion) of external object 38. The sensing operations may be performed over a relatively short range such as ranges of a few cm from antennas 34 or over longer ranges such as ranges of dozens of cm, a few meters, dozens of meters, etc. To minimize the amount of hardware on device 10, wireless circuitry 24 may use one or more of the same antenna 34 to both convey wireless communications data with base station 40 (e.g., using radio-frequency signals 42) and to perform sensing operations.

When performing sensing operations, one or more antennas 34 may transmit radio-frequency signals 44. Wireless circuitry 24 may transmit radio-frequency signals 44 in a corresponding radio frequency band (e.g.,

a frequency band that includes frequencies greater than around 10 GHz, greater than around 20 GHz, less than 10 GHz, etc.). Radio-frequency signals 44 may include chirp signals (e.g., signals that periodically ramp up in frequency over time), as one example. Radio-frequency signals 44 may reflect off objects external to device 10 such as external object 38 as reflected radio-frequency signals 46. One or more antennas 34 may receive reflected signals 46. Reflected signals 46 may be a reflected version of the transmitted radio-frequency signals 44 that have reflected off external object 38 and back towards device 10.

Control circuitry 14 may process the transmitted radio-frequency signals 44 and the received reflected signals 46 to detect or estimate the range R between device 10 and external object 38. If desired, control circuitry 14 may also process the transmitted and received signals to identify a two or three-dimensional spatial location (position) of external object 38, a velocity of external object 38, and/or an angle of arrival of reflected signals 46. In one implementation that is described herein as an example, wireless circuitry 24 performs sensing operations using a frequency-modulated continuous-wave (FMCW) radar scheme. This is merely illustrative and, in general, other radar schemes or spatial ranging schemes may be used (e.g., an OFDM radar scheme, an FSCW radar scheme, a phase coded radar scheme, etc.). In embodiments where wireless circuitry 24 uses an FMCW radar scheme, doppler shifts in the continuous wave signals may be detected and processed to identify the velocity of external object 38 and the time dependent frequency difference between radio-frequency signals 44 and reflected signals 46 may be detected and processed to identify range R and/or the position of external object 38. Use of continuous wave signals for estimating range R may allow control circuitry 10 to reliably distinguish between external object 38 and other background or slower-moving objects, for example.

Control circuitry 14 may use the detected presence, location, orientation, and/or velocity of the external objects (e.g., range R) to perform any desired device operations. As examples, control circuitry 14 may use the detected presence, location, orientation, and/or velocity of the external objects to identify a corresponding user input for one or more software applications running on device 10 such as a gesture input performed by the user's hand(s) or other body parts or performed by an external stylus, gaming controller, head-mounted device, or other peripheral devices or accessories, to determine when one or more antennas 34 needs to be disabled or provided with a reduced maximum transmit power level (e.g., for satisfying regulatory limits on radio-frequency exposure), to determine how to steer a radio-frequency signal beam produced by antennas 34 (e.g., in scenarios where antennas 34 include a phased array of antennas 34), to map or model the environment around device 10 (e.g., to produce a software model of the room where device 10 is located for use by an augmented reality application, gaming application, map application, home design application, engineering application, etc.), to detect the presence of obstacles in the vicinity of (e.g., around) device 10 or in the direction of motion of the user of device 10, etc.

In embodiments that are described herein as an example, control circuitry 14 may use the detected range R to determine when and how to back off the maximum transmit power level of radio(s) 28 and/or when/how to disable UL transmission by radio(s) 28 to ensure that regulatory limits on radio-frequency exposure remain satisfied over time. The regulatory body imposing limits on RFE may, for example, require maximum exposure to be no more than a given value (e.g., 10 W/m$^2$ in any 4 cm$^2$ area) when averaged over an averaging window of D seconds. The duration of averaging window D may depend on the frequency of radio-frequency signals 42. For example, averaging window D may be 30 seconds for frequencies between 6-10 GHz, 14 seconds for frequencies between 10-16 GHz, 8 seconds for frequencies between 16-24 GHz, 4 seconds for frequencies between 24-42 GHz, and 2 seconds for frequencies between 42-95 GHz. In other words, to meet the MPE requirements, transmit power and/or the duration of transmission need to be adjusted and cannot remain fixed.

For example, to meet these requirements on MPE, average transmit power $P_{AVE}$ may need to be reduced according to the equation

$$P_{AVE} = \frac{1}{n}\sum_{i=1}^{n} P_i$$ , where n = [D/T$_S$] and Ts is the duration of a transmission opportunity (sometimes referred to herein as a slot). Average power reduction can be a fixed value or may depend on the range R measured by wireless circuitry 24 while performing sensing operations. For example, greater average power reductions may be required when range R is relatively low (e.g., when external object 38 is relatively close to antenna(s) 34 and therefore susceptible to more RFE) than when range R is relatively far. When there is no external object 38 (e.g., human body) close to device 10, transmit power is unrestricted and transmissions are unimpeded within the limits of the communications protocol governing radio-frequency signals 42, thereby allowing maximum data throughput for device 10. Average power reduction can be achieved via fixed or distance-dependent transmit power backoffs and/or by ensuring that the ratio of sum of transmission times to the duration of averaging window D is such that MPE and SAR limits are met.

In sum, wireless circuitry 24 may perform sensing operations to measure range R to ensure that wireless circuitry continues to meet regulatory limits on RFE for radio-frequency signals 42. Ideally, wireless circuitry 24 may always perform sensing operations to continually track range R at all times. However, continually tracking range R at all times may require wireless circuitry 24 to have dedicated antennas 34 for performing sensing operations. This may consume excessive space and resources on device 10. To minimize space and resource consumption on device 10, wireless circuitry 24 may perform sensing operations using the same antennas 34 that are used to convey radio-frequency signals 42. However, wireless circuitry 24 cannot always perform sensing operations to continually track range R at all times using antennas 34 that are also used to convey radio-frequency signals 42 (e.g., because antenna 34 cannot transmit both radio-frequency signals 42 and radio-frequency signals 44 at the same time without sacrificing signal quality). Wireless circuitry 24 may therefore perform sensing operations (e.g., transmit radio-frequency signals 44 and receive reflected signals 46) over any given antenna 34 in a time-interleaved (duplexed) manner with wireless communications operations (e.g., transmission and/or reception of radio-frequency signals 42). If care is not taken, the sensing operations may undesirably disrupt the wireless communications operations, leading to data errors or losses in the transmitted and/or received radio-frequency signals 42.

To allow device 10 to perform time-duplexed sensing operations and wireless communications operations over a given antenna 34 with no or minimal disruption to the wireless communications operations, wireless circuitry 24 may utilize quiet periods in the wireless communications data scheduling for device 10 to transmit radio-frequency signals 44 and receive reflected signals 46. Such utilization may schedule the transmission of radio-frequency signals 44 and the reception of reflected signals 46 at times when the sensing operations will have either no impact or a statistically minimal impact on wireless data communications using radio-frequency signals 42.

To identify times at which the sensing operations will have either no impact or a statistically minimal impact on wireless data communications using radio-frequency signals 42, wireless circuitry 24 may include a sensing controller such as sensing controller 48. Sensing controller 48 may identify network settings governing wireless communications between base station 40 and device 10. Sensing controller 48 may identify the network settings from network configuration information CONFIG received at sensing controller 48. Sensing controller 48 may, for example, receive network configuration information CONFIG via downlink radio-frequency signals 42 transmitted by base station 40 (e.g., control/configuration signals) as received at antenna(s) 34 and radio(s) 28 (e.g., using a radio link control (L2) layer). Sensing controller 48 may identify times at which the sensing operations will have either no impact or a statistically minimal impact on wireless data communications based on network configuration information CONFIG and based on the current or expected sensing requirements for wireless circuitry 24. Sensing controller 48 may generate control signals CTRL that are provided to radio(s) 28 and that control radio(s) 28 to transmit radio-frequency signals 44 and to receive reflected signals 46 (e.g., to perform sensing operations) at these identified sensing times. Sensing controller 48 may, for example, be operated in a physical (PHY) layer (L1) controller on device 10.

The example of FIG. 1 is merely illustrative. While control circuitry 14 is shown separately from wireless circuitry 24 in the example of FIG. 1 for the sake of clarity, wireless circuitry 24 may include processing circuitry (e.g., one or more processors) that forms a part of processing circuitry 18 and/or storage circuitry that forms a part of storage circuitry 16 of control circuitry 14 (e.g., portions of control circuitry 14 may be implemented on wireless circuitry 24). As an example, control circuitry 14 may include baseband circuitry (e.g., one or more baseband processors), digital control circuitry, analog control circuitry, and/or other control circuitry that forms part of sensing controller 48, RF exposure manager 26, and/or radio(s) 28. The baseband circuitry may, for example, access a communication protocol stack on control circuitry 14 (e.g., storage circuitry 20) to: perform user plane functions at a PHY layer, MAC layer, RLC layer, PDCP layer, SDAP layer, and/or PDU layer, and/or to perform control plane functions at the PHY layer, MAC layer, RLC layer, PDCP layer, RRC, layer, and/or non-access stratum layer. If desired, the PHY layer operations may additionally or alternatively be performed by radio-frequency (RF) interface circuitry in wireless circuitry 24.

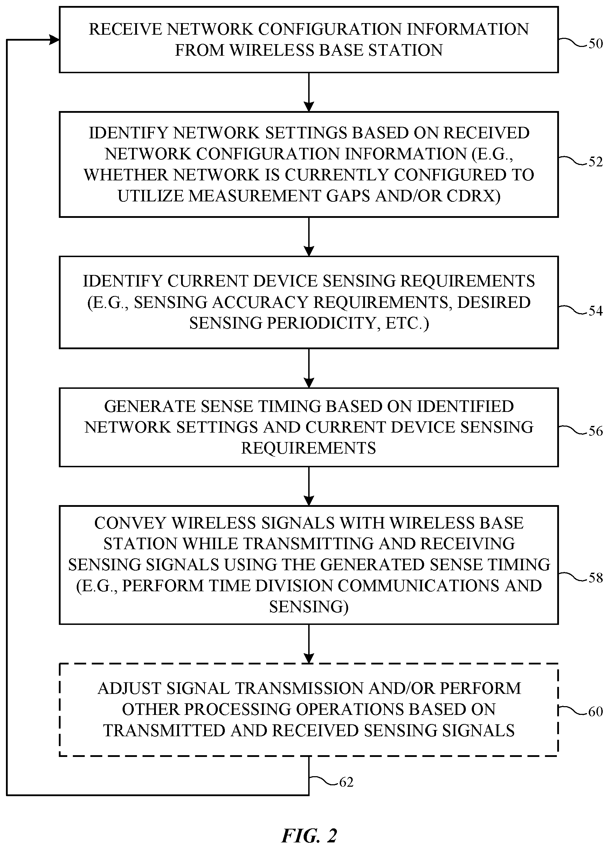

FIG. 2 is a flow chart of illustrative operations involved in using wireless circuitry 24 to perform sensing operations by scheduling the transmission of radio-frequency signals 44 and the reception of reflected signals 46 at times when the sensing operations will have either no impact or a statistically minimal impact on wireless data communications using radio-frequency signals 42.

At operation 50, sensing controller 48 may receive network configuration information CONFIG from base station 40. For example, wireless circuitry 24 may receive DL radio-frequency signals 42 that include network configuration information CONFIG and may pass the network configuration information to sensing controller 48.

At operation 52, sensing controller 48 may identify network settings associated with base station 40 (e.g., communications between base station 40 and device 10) based on network configuration information CONFIG. The network configuration information may include a communications schedule identifying scheduled UL and/or DL time slots and/or data for device 10, a measurement gap setting (e.g., information identifying whether wireless communications between device 10 and base station 40 currently implement or are scheduled/allocated to implement a periodic measurement gap (MG)), and a connected mode discontinuous reception (CDRX) reception setting (e.g., information identifying whether wireless communications between device 10 and base station 40 currently implement or are scheduled/allocated to implement a CDRX scheme), as examples.

At operation 54, sensing controller 48 may identify current device sensing requirements. The sensing requirements may include sensing accuracy requirements (e.g., the accuracy with which range R needs to meet in performing the sensing operations), a desired sensing periodicity (e.g., the periodicity required between sensing periods in which sensing operations are performed, which may be related to the sensing accuracy requirements), etc. The sensing accuracy requirements and periodicity may be related to the particular gestures or motions in external object 38 that control circuitry 14 is searching for (e.g., to distinguish humans from other types of external objects 38 that may not be subject to RFE regulations). In general, higher desired accuracy requires more overall sensing time than lower accuracy.

At operation 56, sensing controller 48 may generate timing for the sensing operations to be performed by wireless circuitry 24 (sometimes referred to herein as sense timing) based on the identified network settings and the current device sensing requirements. The sense timing may, for example, identify scheduled times at which wireless circuitry 24 is to perform sensing operations (e.g., by transmitting radio-frequency signals 44 and receiving reflected signals 46) that produce either no disruption or statistically minimal disruption to wireless data communications using radio-frequency signals 42. The sense timing may allow wireless circuitry 24 to meet the current device sensing requirements given the current network settings used to convey radio-frequency signals 42.

At operation 58, wireless circuitry 24 may convey radio-frequency signals 42 with base station 40 (e.g., according to a network schedule that implements the identified network settings). At the same time, wireless circuitry 24 may transmit radio-frequency signals 44 and may receive reflected signals 46 using the identified sense timing. In this way, wireless circuitry 24 may perform time division duplexing of wireless communications using radio-frequency signals 42 and sensing operations using signals 44 and 46 while meeting the device sensing requirements and while introducing no disruption or statistically minimal disruption to the wireless communications using radio-frequency signals 42 given the current network settings. The sense timing may identify one or more sensing periods within the communications schedule for radio-frequency signals 42 during which wireless circuitry 24 transmits radio-frequency signals 44 and receives reflected signals 46. Control circuitry 14 may process the transmitted radio-frequency signals 44 and the received reflected signals 46 across one or more of the sensing periods to identify and/or track range R between device 10 and external object 38 (e.g., a human target).

At optional operation 60, control circuitry 14 (e.g., RF exposure manager 26) may adjust transmission of UL radio-frequency signals 42 by radio(s) 28 based on the identified and/or tracked range R between device 10 and externa object 38 to ensure that device 10 continues to meet any applicable RFE regulations. For example, control circuitry 14 may reduce the average or maximum transmit power level of antenna(s) 34 and/or may reduce the amount of time that radio(s) 28 and antenna(s) 34 are actively transmitting UL signals to ensure that device 10 continues to meet the applicable RFE regulations. If desired, control circuitry 14 may perform any other desired operations based on the identified range R and/or any other desired sensing data gathered from signals 44 and 46 indicative of the presence, distance, location, orientation, and/or velocity of external object 38 (e.g., identify user input gestures, perform object tracking or safety functions, etc.). Optional operation 60 may be omitted if desired. Processing may loop back to operation 50 via path 62 to allow device 10 to update sense timing when the network settings change or are updated. Additionally or alternatively, path 62 may loop back to operation 54 to update sense timing when the current device sensing requirements change or are updated.

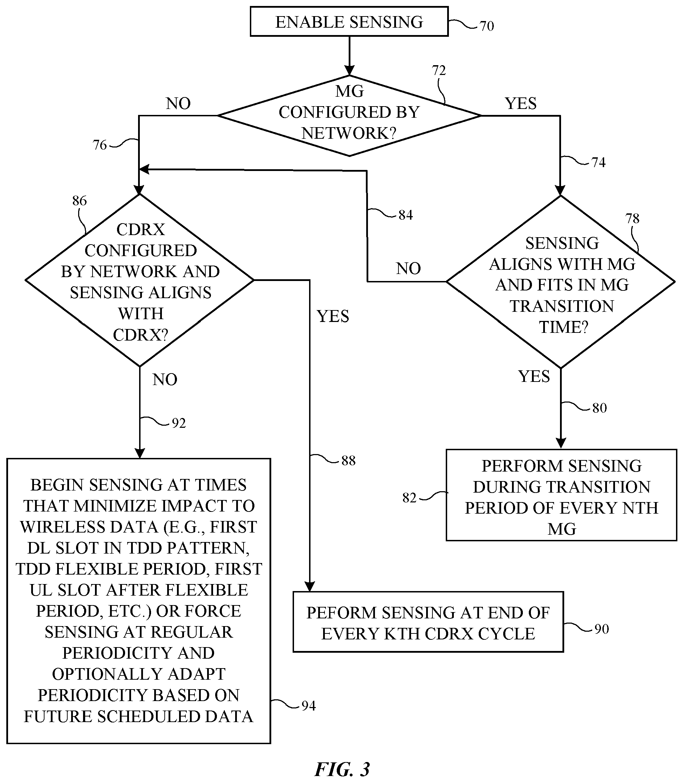

FIG. 3 is a flow chart of illustrative operations showing one example of how sensing controller 48 may change or set the sense timing for wireless circuitry 24 based on the current device sensing requirements and the current network settings (e.g., while processing operation 56 of FIG. 2). Control circuitry 14 may control wireless circuitry 24 to begin or enable sensing at operation 70 of FIG. 3. As examples, sensing may be enabled when the network reconfigures device 10 (e.g., during handover) or when software running on device 10 decides to change sensing settings.

At operation 72, sensing controller 48 may determine whether the network (e.g., base station 40) has configured wireless data communications between base station 40 and device 10 to use measurement gaps (MG). Measurement gaps MG may be described by the communications protocol governing radio-frequency signals 42 (e.g., a 3GPP 5G NR FR2 communications protocol). The communications protocol generally makes the use of measurement gaps MG optional, so there will be some cases in which base station 40 uses measurement gaps MG and some cases in which base station 40 does not use measurement gaps MG.

In general, device 10 communicates with base station 40 using radio-frequency signals 42 when device 10 is located within the coverage area or cell of base station 40. Measurement gaps MG are windows in time (e.g., gaps in data communications with no UL or DL data exchanged) that the network (e.g., base station 40) configures for device 10 to measure or search for wireless signals at frequencies potentially used by an adjacent coverage area or cell (e.g., as transmitted by an adjacent base station). When measurement gaps MG are configured for use, measurement gaps MG may occur every 20-80 ms, for example. Measurement gaps MG may each have a duration of 6 ms or other durations, as examples. Device 10 may use the measurement gaps to search for nearby cells and, if wireless communications exhibit better performance for one of the nearby cells, may initiate a handover with base station 40 to the nearby cell.

If measurement gaps MG are configured by the network for device 10 for use in communicating with base station 40, processing may proceed to operation 78 via path 74. At operation 78, sensing controller 48 may determine whether the current device sensing requirements align with the measurement gaps MG and whether the current sensing requirements fit within the measurement gaps MG. The current device sensing requirements are deemed to "fit" within the measurement gaps MG when the duration of each sensing period (e.g., as determined by the current device sensing requirements) is less than or equal to the duration of a single measurement gap MG (e.g., sensing controller 48 may determine whether the duration of a sensing period is less than or equal to the duration of a measurement gap MG). The current device sensing requirements are deemed to be "aligned" with measurement gaps MG if the sensing periodicity (e.g., as determined by the current device sensing requirements) is sufficiently close to the periodicity of the measurement gaps MG (e.g., sensing controller 48 may determine whether the sensing periodicity is sufficiently close to the periodicity of measurement gaps MG). Mathematically, the current device sensing requirements may identify a target sensing periodicity $P_{SENSING\_TARGET}$. The current network settings may identify a measurement gap periodicity MGRP (e.g., the measurement gap repetition period). Let $P_{SENSING\_ACTUAL} = [P_{SENSING\_TARGET}/MGRP] \times MGRP$. The current device sensing requirements are considered aligned with measurement gaps MG if $P_{SENSING\_ACTUAL}/P_{SENSING\_TARGET} \geq MIN\_ALIGNMENT_{MG}$, where $MIN\_ALIGNMENT_{MG}$ is a predetermined threshold value close to unity (e.g., 95%).

If the current device sensing requirements are aligned with the measurement gaps MG and the current sensing requirements fit within the measurement gaps MG (e.g., the duration of the sensing period is less than or equal to the duration of the measurement gap), processing may proceed to operation 82 via path 80. At operation 82, wireless circuitry 24 may perform sensing during the transition period of every Nth measurement gap MG in the scheduled communications between device 10 and base station 40. In other words, sensing controller 48 may set the sense timing of wireless circuitry 24 to align with the transition period of every Nth measurement gap MG. Processing may then proceed to operation 58 of FIG. 2.

If the current device sensing requirements are not aligned with the measurement gaps MG (e.g., are misaligned), or the current sensing requirements do not fit within measurement gaps MG (e.g., the duration of the sensing period exceeds the duration of the measurement gap), then the transition period of every Nth measurement gap MP is not suitable for device 10 to meet its current device sensing requirements and processing may proceed from operation 78 to operation 86 via paths 84 and 76. Similarly, if the network has not configured or scheduled communications between base station 40 and device 10 to include measurement gaps MG (e.g., if measurement gaps MG are not configured by the network), processing may proceed from operation 72 to operation 86 via path 76.

At operation 86, sensing controller 48 may determine whether the network (e.g., base station 40) has configured wireless data communications between base station 40 and device 10 to use connected mode discontinuous reception (CDRX) for radio-frequency signals 42 and, if so, whether the current device sensing requirements align with the CDRX cycle. CDRX is a communications mode for radio-frequency signals 42 (e.g., as described by the communications protocol governing radio-frequency signals 42) in which the receiver of radio(s) 28 on device 10 is only active if a header at the beginning of each slot identifies that that particular device 10 is to receive DL data in the upcoming slot (otherwise, the receiver will remain asleep during the upcoming slot). The communications protocol generally makes the use of CDRX optional, so there will be some cases in which base station 40 uses CDRX and some cases in which base station 40 does not use CDRX. Using CDRX may help to conserve the battery life on device 10, for example.

If CDRX is configured by the network for device 10 to use in communicating with base station 40, sensing controller 48 may determine whether the current device sensing requirements align with the CDRX cycles (e.g., with the end or idle time of every Kth CDRX cycle). Mathematically, the current device sensing requirements may identify a target sensing periodicity $P_{SENSING\_TARGET}$. The current network settings may identify a CDRX cycle DRX_CYCLE (e.g., the periodicity of the DRX cycle). Let $P_{SENSING\_ACTUAL} = [P_{SENSING\_TARGET}/DRX\_CYCLE] \times DRX\_CYCLE$. The current device sensing requirements are considered aligned with CDRX cycles if $P_{SENSING\_ACTUAL}/P_{SENSING\_TARGET} \geq MIN\_ALIGNMENT_{DRX}$, where $MIN\_ALIGNMENT_{DRX}$ is a predetermined threshold value close to unity (e.g., 95%). In this example, K is equal to the total sensing duration divided by the OFDM symbol duration. Sensing needs to be attempted every K OFDM symbols before a "DRX on" period.

If the network has configured device 10 and base station 40 to perform wireless data communications using CDRX (e.g., if CDRX is configured by the network) and if the current device sensing requirements are aligned with the CDRX cycles, processing may proceed to operation 90 via path 88. At operation 90, wireless circuitry 24 may perform sensing at the end of every Kth CDRX cycle. This may occur, for example, during a DRX idle period of every Kth CDRX cycle. In other words, sensing controller 48 may set the sense timing of wireless circuitry 24 to align with the end of every Kth CDRX cycle. Processing may then proceed to operation 58 of FIG. 2.

If the network has not configured device 10 and base station 40 to perform wireless data communications using CDRX (e.g., if CDRX is not configured by the network) or if the current device sensing requirements are not aligned with the CDRX cycles (e.g., are misaligned), processing may proceed to operation 94 via path 92. At operation 94, wireless circuitry 24 may begin sensing at times that minimize the impact of the sensing operations on wireless data conveyed over radio-frequency signals 42. In other words, sensing controller 48 may set the sense timing of wireless circuitry 24 to align with times during wireless data communications that minimizes the disruption to wireless data communications introduced by the sensing operations. Such times may include the first DL slot in a time division duplex (TDD) pattern of the communications schedule, a time within a TDD flexible (transition) period between UL transmission and DL reception at device 10 (or vice versa), the beginning of the first UL slot after a TDD flexible period, etc. Additionally or alternatively, wireless circuitry 24 may force sensing operations at a regular periodicity that meets the current device sensing requirements despite any corresponding disruption to wireless data communications (e.g., during an FR2 radio resource control (RRC) connected state RRC_CONNECTED and/or during an RA preamble transmission at an FR2 frequency). If desired, sensing controller 48 may optionally adapt/adjust one or more sensing periods at the regular periodicity based on future scheduled data.

In general, sense timing that aligns with the transition period of every Nth measurement gap MG (e.g., at operation 82) may allow wireless circuitry 24 to perform sensing operations without any impact to wireless data communications over radio-frequency signals 42. Sense timing that aligns with the end of every Kth CDRX cycle (e.g., at operation 82) may also allow wireless circuitry 24 to perform sensing operations without any impact to wireless data communications over radio-frequency signals 42 but also introduces some probability of at least some disruption to wireless data communications (e.g., depending on the amount of data conveyed during the DRX "on" period of the Kth CDRX cycle). Other sense timing that minimizes impact to wireless data (e.g., at operation 94) may introduce more probability of disruption to wireless data communications than sense timing that aligns with the end of every Kth CDRX cycle (operation 82). Finally, forcing sensing at regular periodicity (e.g., at operation 94) introduces the highest probability of disruption to wireless data communications. This probability may be reduced by optionally adapting the periodicity based on future scheduled data. Sensing controller 48 may switch wireless circuitry 24 between the sense timings of operations 82, 90, and 94 over time as the current device sensing requirements and/or the network settings change over time.

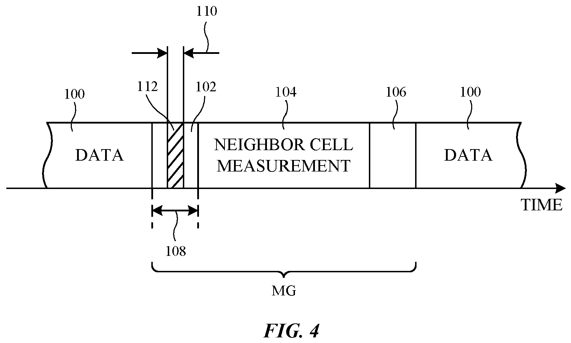

FIG. 4 is a timing diagram showing how wireless circuitry 24 performs sensing during the transition period of every Nth measurement gap MG (e.g., at operation 82 of FIG. 3) according to the claims. As shown in FIG. 4, device 10 and base station 40-may convey wireless communications data in radio-frequency signals 42 during data blocks 100. Base station 40 schedules periodic measurement gaps such as measurement gap MG between data blocks 100. Measurement gap MG includes a first transition period (block) 102, a neighbor cell measurement period (block) 104 after transition period 102, and a second transition period (block) 106 after neighbor cell measurement period 104.

During neighbor cell measurement period 104, device 10 may search for wireless signals transmitted by other base stations in other cells (e.g., at frequencies other than the frequency used by base station 40 during data blocks 100). The communication protocol governing radio-frequency signals 42 may dictate that device 10 is not expected to detect synchronization signal blocks (SSBs) within transition periods 102 and 106, for example.

Transition period 102 has a transition period duration 108. Transition period duration 108 may be budgeted to allow time for the radio-frequency components on device 10 to switch from the frequency of data block 100 to a different frequency to be used during neighbor cell measurement period 104, as well as a corresponding settling time and antenna tuning time. Transition period duration 108 may be 250 microseconds, as one example. However, device 10 may be able to switch frequencies, settle, and switch antenna tuning settings in less time than transition period duration 108 (e.g., within 100 microseconds). As such, a large portion of transition period 102 may involve no activity at radio 28 on device 10.

Sensing controller 48 may take advantage of this by controlling radio 28 to align sensing period 112 within transition period 102 (e.g., by setting the sense timing such that sensing period 112 starts and ends within transition period 102). Wireless circuitry 24 may transmit radio-frequency signals 44 and may receive reflected signals 46 within sensing period 112. Sensing period 112 may have a duration 110. The sense timing fits within the MG transition time (e.g., as determined at operation 78 of FIG. 3) when duration 110 is less than or equal to transition period duration 108. The sense timing aligns with the measurement gaps when the periodicity of sense periods 112 (e.g., as determined by the current device sensing requirements) is sufficiently close to the periodicity of the measurement gaps. Since radio 28 is inactive during transition period 102 (e.g., after switching frequencies, settling, and tuning), aligning sensing period 112 with transition period 102 may ensure that the sensing operations performed by wireless circuitry 24 does not disrupt wireless data communications by device 10.

The example of FIG. 4 in which sensing period 112 is located within the transition period 102 before the start of neighbor cell measurement period 104 is merely illustrative. If desired, sensing period 112 may be located within the transition period 106 after the end of neighbor cell measurement period 104. During transition period 106, radio 28 may switch frequencies from the frequencies used during neighbor cell measurement period 104 back to the carrier frequency used by base station 40 during data block 100, may settle, and may adjust antenna tuning settings during transition period 106.

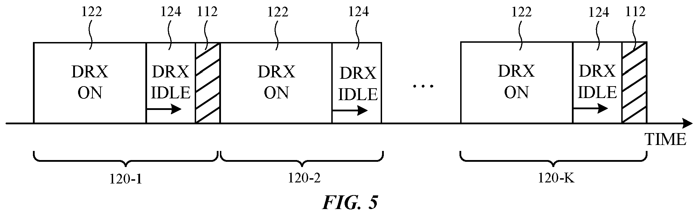

The embodiments shown in figures 5, 6 and 7 do not fall under the scope of the appended claims but are to be considered merely as examples suitable for understanding the invention.

FIG. 5 is a timing diagram showing how wireless circuitry 24 may perform sensing at the end of every Kth CDRX cycle (e.g., at operation 90 of FIG. 5). As shown in FIG. 5, device 10 and base station 40 may convey wireless communications data in radio-frequency signals 42 during a series of data reception (DRX) cycles 120 (e.g., a first DRX cycle 120-1, a second DRX cycle 120-2, a Kth DRX cycle 120-K, etc.). Each DRX cycle 120 may include a DRX "on" period 122 (sometimes referred to herein as active period 122) and a corresponding DRX idle period 124. The duration of DRX on period 122 is configured (allocated/scheduled) by the network and may vary from 10 ms up to 2.56 s (e.g., 40-80 ms), depending on the amount of data that needs to be transmitted in each DRX cycle. Radio 28 in device 10 remains turned on (e.g., active or awake) during DRX on period 122 to check for incoming data and/or to transmit data to the network.

After DRX on period 122, each DRX cycle 120 includes a corresponding scheduled DRX idle period 124. During DRX idle period 124, the radio in device 10 is turned off or asleep to conserve power. Sensing controller 48 may take advantage of this by scheduling sensing period 112 within DRX idle period 124 (e.g., by activating radio 28 when the radio would otherwise be scheduled by the network to be idle in the CDRX mode). The scheduled duration of DRX idle period 124 may be adjusted by the network based on the scheduled duration of the corresponding DRX on period 122. For example, when there is a relatively high amount of data in DRX on period 122, DRX on period 122 may be extended into DRX idle period 124 as shown by arrow 126. To minimize the probability of sensing period 112 interrupting wireless data communications, sensing controller 48 may align sensing period 112 with the end of DRX idle period 124 (e.g., such that the end of sensing period 112 is aligned with the end of the corresponding DRX cycle 120). While there is still some risk that DRX on period 122 (e.g., UL re-transmissions, HARQ feedback transmissions and receptions, DL re-transmissions, etc.) will encroach on sensing period 112 when there is a high amount of data to be conveyed during the DRX on period, placing sensing period 112 at the end of DRX idle period 124 minimizes this risk and thus the risk that sensing period 112 will disrupt wireless data communications for device 10.

Sensing controller 48 may place a sensing period 112 at the end of the DRX idle period 124 of every Kth DRX cycle 120, for example (e.g., within DRX cycle 120-1 and DRX cycle 120-K of FIG. 5). The sense timing aligns with the end of DRX idle periods 124 when the periodicity of sense periods 112 (e.g., as determined by the current device sensing requirements) is sufficiently close to the periodicity of DRX cycles 120. The example of FIG. 5 in which DRX idle period 124 is at the end of each DRX cycle 120 is merely illustrative and, in general, DRX idle period 124 may be located anywhere within the corresponding DRX cycle 120.

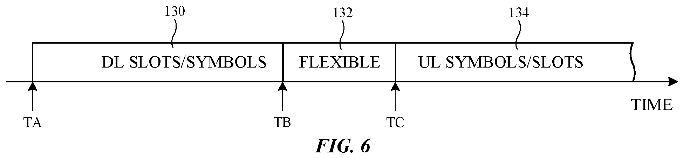

FIG. 6 is a timing diagram showing how wireless circuitry 24 may perform sensing at times that minimize impact to wireless data in radio-frequency signals 42 in scenarios where measurement gaps MG are not configured by the network (or where sensing periods 112 are misaligned or do not fit within the measurement gaps) and where CDRX is not configured by the network (or where sensing periods 112 are misaligned with the DRX idle periods in the DRX cycles) (e.g., at operation 94 of FIG. 3).

As shown in FIG. 6, the network may schedule DL slots and symbols 130 for transmission of DL signals from base station 40 to device 10 (e.g., between times TA and TB). The network may then schedule UL symbols and slots 134 for transmission of UL signals from device 10 to base station 40 (e.g., after time TC). In other words, UL and DL transmission may be time division duplexed in the communications schedule for device 10 and base station 40. The network may also schedule a flexible period 132 (sometimes referred to as transition period 132) between DL slots/symbols 130 and UL symbols/slots 134. Flexible period 132 may be scheduled to allow radio 28 on device 10 time to switch between frequencies used for DL slots/symbols 130 to frequencies used for UL symbols/slots 134 as well as corresponding settling time and antenna tuning time. Flexible periods 132 may also be scheduled during the transition from UL symbols/slots to DL slots/symbols.

To minimize the probability of sensing operations disrupting wireless data transfer between device 10 and base station 40, sensing controller 48 may control radio 28 to begin a sensing period at the beginning of flexible period 132 (e.g., a sensing period 112 beginning at time TB), at the first DL slot in DL slots/symbols 130 (e.g., a sensing period 112 beginning at time TA), or at the first UL slot in UL symbols/slots 134 (e.g., a sensing period 112 beginning at time TC). When the sensing period begins at time TB, the sensing period may extend past time TC into the scheduled time for UL symbols/slots 134 in some cases. However, beginning the sensing period at time TB may involve less disruption to wireless communications than beginning the sensing period at time TA or at time TC. Beginning the sensing period at any of these times may involve less disruption to wireless communications than forcing sensing operations during a regular periodicity.

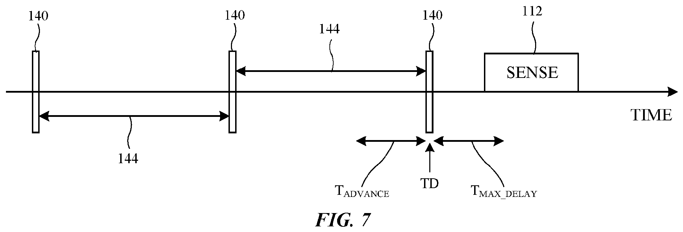

FIG. 7 is a timing diagram showing how sensing controller 48 may force sensing at a regular periodicity in scenarios where measurement gaps MG are not configured by the network (or where sensing periods 112 are misaligned or do not fit within the measurement gaps) and where CDRX is not configured by the network (or where sensing periods 112 are misaligned with the DRX idle periods in the DRX cycles) (e.g., at operation 94 of FIG. 3).

As shown in FIG. 7, sensing controller 48 may control radio 28 to perform sensing operations during regularly spaced sensing periods beginning at sensing times 140 regardless of the wireless data communications scheduled for device 10 by the network. In other words, sensing periods 112 (only one of which is shown in FIG. 7 for the sake of simplicity) and sensing times 140 may have nominal sensing periodicity 144 (e.g., 200 ms). Sensing periodicity 144 may, for example, be the sensing periodicity that best meets the current device sensing requirements (e.g., as identified at operation 54 of FIG. 2). Forcing regular sensing periods in this way may involve the most disruption to wireless data communications while ensuring that the sensing requirements of device 10 are met.

To help mitigate this disruption, sensing controller 48 may dynamically adapt (adjust) the periodicity at one or more nominal sensing times 140 based on futured scheduled wireless communications data for device 10 if desired. For example, at an advance time $T_{ADVANCE}$ before any given nominal sensing time 140 (e.g., a nominal sensing time 140 at time TD of FIG. 7), sensing controller 48 may process the communications schedule for device 10 to determine whether there is any scheduled data traffic within delay time $T_{MAX\_DELAY}$ from the nominal sensing time 140 (e.g., within a time window between advance time $T_{ADVANCE}$ and delay time $T_{MAX\_DELAY}$). If there is no scheduled data traffic during this time window (e.g., during an idle time for radio 28 such as when UL is muted due to duty cycling), sensing controller 48 may control radio 28 to begin a sensing period 112 at some other time within the timing window (e.g., within delay time $T_{MAX\_DELAY}$ of the nominal sensing time 140 at time TD) such that the sensing period is aligned with the idle time for radio 28.

This adaptive sense timing may also be used to accommodate high priority activities scheduled for device 10 by the network. Such high priority activities may include DL/UL hybrid automatic repeat request (HARQ) acknowledgment/non-acknowledgement (ACK/NACK), ultra-reliable low latency communication (URLLC) TX/RX, and/or beam management measurements. When such high priority tasks are present in the communications schedule, the high priority tasks can be moved up in time (e.g., closer to the nominal sensing time 140 at time TD) or may be allowed to complete whereas sense period 112 is deferred until after those high priority tasks are complete (e.g., so long as sense period 112 can begin within delay time $T_{MAX\_DELAY}$ of the nominal sensing time 140).

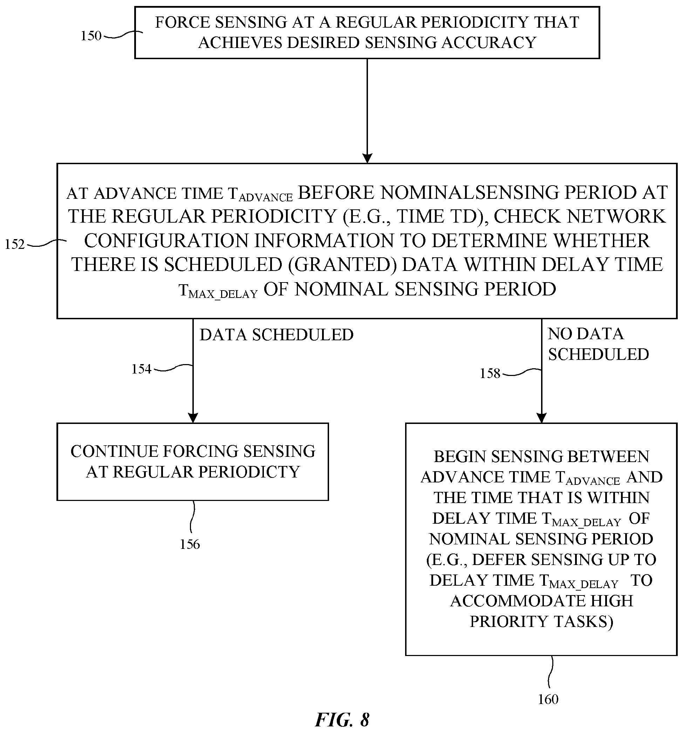

FIG. 8 is a flow chart of illustrative operations that may be performed by sensing controller 48 to dynamically adapt (adjust) the periodicity at one or more nominal sensing times 140 based on futured scheduled wireless communications data for device 10. Sensing controller 48 may perform the operations of FIG. 8 while processing operation 94 of FIG. 3, for example.

At operation 150, sensing controller 48 may control (e.g., force) radio 28 to perform sensing periods 112 beginning at sensing times 140 separated by sense periodicity 144 (e.g., a sense periodicity that allows radio 28 to obtain a predetermined sensing accuracy).

At operation 152, at advance time $T_{ADVANCE}$ before a nominal sensing time 140 (e.g., at time TD of FIG. 7), sensing controller 48 may check the network configuration information to determine whether there is scheduled (granted) data within delay time $T_{MAX\_DELAY}$ of the nominal sensing time 140. If there is no data within delay time $T_{MAX\_DELAY}$ or if there is high priority data that can be used to defer sense period to a different start time that is still within delay time $T_{MAX\_DELAY}$, processing may proceed to operation 160 via path 158.

At operation 160, sensing controller 48 may control radio 28 to begin sense period 112 at some other time between advance time $T_{ADVANCE}$ and delay time $T_{MAX\_DELAY}$ (e.g., some other time within delay time $T_{MAX\_DELAY}$ of nominal sensing time 140). If desired, this adjustment to the nominal sensing time may serve as a deferral that accommodates high priority tasks for radio 28. If there is data within delay time $T_{MAX\_DELAY}$ of nominal sensing time, processing may proceed from operation 152 to operation 156 via path 154.

At operation 156, sensing controller 48 may continue to control (e.g., force) radio 28 to begin sensing period 112 at the nominal sensing time 140 (e.g., without deferral). This may be repeated for every nominal sensing time 140 or at any desired number of nominal sensing times 140. Dynamically adapting nominal sensing times 140 from the regular sense periodicity may help to reduce disruptions to the wireless data conveyed between device 10 and base station 40 relative to scenarios where no dynamic adaptation is performed, while also accommodating high priority tasks.

Device 10 may gather and/or use personally identifiable information. It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

The methods and operations described above in connection with FIGS. 1-8 may be performed by the components of device 10 using software, firmware, and/or hardware (e.g., dedicated circuitry or hardware). Software code for performing these operations may be stored on non-transitory computer readable storage media (e.g., tangible computer readable storage media) stored on one or more of the components of device 10 (e.g., storage circuitry 16 of FIG. 1). The software code may sometimes be referred to as software, data, instructions, program instructions, or code. The non-transitory computer readable storage media may include drives, non-volatile memory such as non-volatile random-access memory (NVRAM), removable flash drives or other removable media, other types of random-access memory, etc. Software stored on the non-transitory computer readable storage media may be executed by processing circuitry on one or more of the components of device 10 (e.g., processing circuitry 18 of FIG. 1, etc.). The processing circuitry may include microprocessors, central processing units (CPUs), application-specific integrated circuits with processing circuitry, or other processing circuitry.

The foregoing is merely illustrative and various modifications can be made to the described embodiments which fall within the scope of the appended claims.

**Claims**

1.  An electronic device (10) comprising:
    one or more antennas (34):

    a radio (28) configured to

    transmit radio-frequency signals to a wireless base station (40) over the one or more antennas (34) during a first scheduled data block and during a second scheduled data block separated in time from the first scheduled data block by a measurement gap, MG, having a neighbor cell measurement period (104),
    perform radio-frequency sensing of an external object (38) using the one or more antennas (34), the radio-frequency sensing comprising transmission of a radio-frequency sensing signal and reception of a reflected radio-frequency sensing signal over the one or more antennas (34) during a transition period of the measurement gap (MG) that is before or after the neighbor cell measurement period (104), and
    receive network configuration information from the wireless base station (40); and

    one or more processors configured to adjust timing of the radio-frequency sensing based on the network configuration information.

2.  The electronic device (10) of claim 1, wherein the one or more processors is configured to align the timing of the radio-frequency sensing with ends of connected mode discontinuous reception, CDRX, cycles in the communications schedule when the network configuration information identifies that the communications schedule is free of measurement gaps (MG), when the timing of the sensing periods is misaligned with the measurement gaps (MG), or when one of the sensing periods does not fit within one of the measurement gaps (MG).

3.  The electronic device (10) of claim 2, wherein the one or more processors is configured to align the timing of the radio-frequency sensing with flexible periods between uplink slots and downlink slots in the communications schedule when the network configuration information identifies that the communications schedule is free of CDRX cycles or that the timing of the sensing periods is misaligned with the CDRX cycles.

4.  The electronic device (10) of claim 3, wherein the one or more processors is configured to align the timing of the radio-frequency sensing with ends of the flexible periods when the network configuration information identifies that the communications schedule is free of CDRX cycles or that the timing of the sensing periods is misaligned with the CDRX cycles.

5.  The electronic device (10) of claim 3, wherein the one or more processors is configured to align the timing of the radio-frequency sensing with beginnings of the flexible periods when the network configuration information identifies that the communications schedule is free of CDRX cycles or that the timing of the sensing periods is misaligned with the CDRX cycles.

6.  The electronic device (10) of claim 2, wherein the one or more processors is configured to align the timing of the radio-frequency sensing with a beginning of a downlink slot in the communications schedule when the network configuration information identifies that the communications schedule is free of CDRX cycles or that the timing of the sensing periods is misaligned with the CDRX cycles.

7.  The electronic device (10) of any preceding claim, wherein the one or more processors is configured to defer a sensing period from a nominal sensing time to a delayed time within a maximum delay time of the nominal sensing time when the communications schedule identifies that there is no data to be conveyed between the nominal sensing time and the maximum delay time.

8.  A method of operating an electronic device (10) comprising:

    with a radio (28), transmitting radio-frequency signals to a wireless base station (40) over one or more antennas (34) during a first scheduled data block and during a second scheduled data block separated in time from the first scheduled data block by a measurement gap (MG) having a neighbor cell measurement period (104);

with the radio (28), transmitting a radio-frequency sensing signal and receiving a reflected radio-frequency sensing signal over the one or more antennas (34) during a transition period (102) of the measurement gap (MG), the transition period (102) being before or after the neighbor cell measurement period (104) of the measurement gap (MG);

with one or more processors, identifying proximity to an external object (38) based on the transmitted radio-frequency sensing signal and the received reflected radio-frequency sensing signal; and

with the one or more processors, adjusting a transmit power level of the radio (28) based on the identified proximity to the external object (38).

9. The method of claim 8, further comprising:
with the one or more processors, adjusting a frequency of the radio (28) and adjusting a tuning setting of the one or more antennas (34) during the transition period.

10. The method of any of claims 8 to 9, wherein transmitting the radio-frequency sensing signal and receiving the reflected radio-frequency sensing signal over the one or more antennas (34) during the measurement gap (MG) comprises transmitting the radio-frequency sensing signal and receiving the reflected radio-frequency sensing signal during a sensing period that is shorter than the transition period (102).

**Patentansprüche**

1. Elektronische Vorrichtung (10), umfassend: eine oder mehrere Antennen (34); ein Funkgerät (28), das konfiguriert ist zum Übertragen von Funkfrequenzsignalen an eine drahtlose Basisstation (40) über die eine oder die mehreren Antennen (34) während eines ersten geplanten Datenblocks und während eines zweiten geplanten Datenblocks, der zeitlich von dem ersten geplanten Datenblock durch eine Messlücke, MG, getrennt ist, die eine Nachbarzellenmessperiode (104) aufweist, Durchführen einer Funkfrequenzerfassung eines äußeren Objekts (38) unter Verwendung der einen oder der mehreren Antennen (34), wobei die Funkfrequenzerfassung eine Übertragung eines Funkfrequenzerfassungssignals und einen Empfang eines reflektierten Funkfrequenzerfassungssignals über die eine oder die mehreren Antennen (34) während einer Übergangsperiode der Messlücke (MG), die vor oder nach der Nachbarzellenmessperiode (104) ist, umfasst, und Empfangen von Netzwerkkonfigurationsinformation von der drahtlosen Basisstation (40); und einen oder mehrere Prozessoren, die konfiguriert sind zum Anpassen einer Zeitsteuerung der Funkfrequenzerfassung basierend auf der Netzwerkkonfigurationsinformation.

2. Elektronische Vorrichtung (10) nach Anspruch 1, wobei der eine oder die mehreren Prozessoren konfiguriert sind zum Ausrichten der Zeitsteuerung der Funkfrequenzerfassung mit Enden von Zyklen eines diskontinuierlichen Empfangs im verbundenen Modus, CDRX, in dem Kommunikationsplan, wenn die Netzwerkkonfigurationsinformation identifiziert, dass der Kommunikationsplan frei von Messlücken (MG) ist, wenn die Zeitsteuerung der Erfassungsperioden mit den Messlücken (MG) fehlausgerichtet ist, oder wenn eine der Erfassungsperioden nicht in eine der Messlücken (MG) passt.

3. Elektronische Vorrichtung (10) nach Anspruch 2, wobei der eine oder die mehreren Prozessoren konfiguriert sind zum Ausrichten der Zeitsteuerung der Funkfrequenzerfassung mit flexiblen Perioden zwischen Uplink-Schlitzen und Downlink-Schlitzen in dem Kommunikationsplan, wenn die Netzwerkkonfigurationsinformation identifiziert, dass der Kommunikationsplan frei von CDRX-Zyklen ist oder dass die Zeitsteuerung der Erfassungsperioden mit den CDRX-Zyklen fehlausgerichtet ist.

4. Elektronische Vorrichtung (10) nach Anspruch 3, wobei der eine oder die mehreren Prozessoren konfiguriert sind zum Ausrichten der Zeitsteuerung der Funkfrequenzerfassung mit Enden der flexiblen Perioden, wenn die Netzwerkkonfigurationsinformation identifiziert, dass der Kommunikationsplan frei von CDRX-Zyklen ist oder dass die Zeitsteuerung der Erfassungsperioden mit den CDRX-Zyklen fehlausgerichtet ist.

5. Elektronische Vorrichtung (10) nach Anspruch 3, wobei der eine oder die mehreren Prozessoren konfiguriert sind zum Ausrichten der Zeitsteuerung der Funkfrequenzerfassung mit Anfängen der flexiblen Perioden, wenn die Netzwerkkonfigurationsinformation identifiziert, dass der Kommunikationsplan frei von CDRX-Zyklen ist oder dass die Zeitsteuerung der Erfassungsperioden mit den CDRX-Zyklen fehlausgerichtet ist.

6. Elektronische Vorrichtung (10) nach Anspruch 2, wobei der eine oder die mehreren Prozessoren konfiguriert sind zum Ausrichten der Zeitsteuerung der Funkfrequenzerfassung mit einem Anfang eines Downlink-Schlitzes in dem Kommunikationsplan, wenn die Netzwerkkonfigurationsinformation identifiziert, dass der Kommunikationsplan frei von CDRX-Zyklen ist oder dass die Zeitsteuerung der Erfassungsperioden mit den CDRX-Zyklen fehlausgerichtet ist.

**7.** Elektronische Vorrichtung (10) nach einem der vorhergehenden Ansprüche, wobei der eine oder die mehreren Prozessoren konfiguriert sind zum Verschieben einer Erfassungsperiode von einer nominalen Erfassungszeit auf eine verzögerte Zeit innerhalb einer maximalen Verzögerungszeit der nominalen Erfassungszeit, wenn der Kommunikationsplan identifiziert, dass zwischen der nominalen Erfassungszeit und der maximalen Verzögerungszeit keine Daten zu übermitteln sind.

**8.** Verfahren zum Betreiben einer elektronischen Vorrichtung (10), umfassend: mit einem Funkgerät (28), Übertragen von Funkfrequenzsignalen an eine drahtlose Basisstation (40) über eine oder mehrere Antennen (34) während eines ersten geplanten Datenblocks und während eines zweiten geplanten Datenblocks, der zeitlich von dem ersten geplanten Datenblock durch eine Messlücke (MG) getrennt ist, die eine Nachbarzellenmessperiode (104) aufweist; mit dem Funkgerät (28), Übertragen eines Funkfrequenzerfassungssignals und Empfangen eines reflektierten Funkfrequenzerfassungssignals über die eine oder die mehreren Antennen (34) während einer Übergangsperiode (102) der Messlücke (MG), wobei die Übergangsperiode (102) vor oder nach der Nachbarzellenmessperiode (104) der Messlücke (MG) ist; mit einem oder mehreren Prozessoren, Identifizieren einer Nähe zu einem äußeren Objekt (38) basierend auf dem übertragenen Funkfrequenzerfassungssignal und dem empfangenen reflektierten Funkfrequenzerfassungssignal; und mit dem einen oder den mehreren Prozessoren, Anpassen eines Übertragungsleistungspegels des Funkgeräts (28) basierend auf der identifizierten Nähe zu dem äußeren Objekt (38).

**9.** Verfahren nach Anspruch 8, ferner umfassend: mit dem einen oder den mehreren Prozessoren, Anpassen einer Frequenz des Funkgeräts (28) und Anpassen einer Abstimmeinstellung der einen oder der mehreren Antennen (34) während der Übergangsperiode.

**10.** Verfahren nach einem der Ansprüche 8 bis 9, wobei das Übertragen des Funkfrequenzerfassungssignals und das Empfangen des reflektierten Funkfrequenzerfassungssignals über die eine oder die mehreren Antennen (34) während der Messlücke (MG) das Übertragen des Funkfrequenzerfassungssignals und das Empfangen des reflektierten Funkfrequenzerfassungssignals während einer Erfassungsperiode umfasst, die kürzer als die Übergangsperiode (102) ist.

**Revendications**

**1.** Un dispositif électronique (10) comprenant :

une ou plusieurs antennes (34) ;
une radio (28) configurée pour transmettre des signaux radiofréquence à une station de base sans fil (40) via les une ou plusieurs antennes (34) pendant un premier bloc de données planifié et pendant un second bloc de données planifié séparé dans le temps du premier bloc de données planifié par un intervalle de mesure (MG) ayant une période de mesure de cellule voisine (104),

effectuer une détection radiofréquence d'un objet externe (38) en utilisant les une ou plusieurs antennes (34), la détection radiofréquence comprenant l'émission d'un signal de détection radiofréquence et la réception d'un signal de détection radiofréquence réfléchi via les une ou plusieurs antennes (34) pendant une période de transition de l'intervalle de mesure (MG) qui se trouve avant ou après la période de mesure de cellule voisine (104), et
la réception d'informations de configuration de réseau en provenance de la station de base sans fil (40) ; et

un ou plusieurs processeurs configurés pour ajuster le séquencement de la détection radiofréquence sur la base des informations de configuration de réseau.

**2.** Le dispositif électronique (10) de la revendication 1, dans lequel les un ou plusieurs processeurs sont configurés pour aligner le séquencement de la détection radiofréquence sur des extrémités de cycles de réception discontinue en mode connecté, CDRX, dans la planification des communications lorsque les informations de configuration de réseau identifient que la planification de communication est dépourvue d'intervalle de mesure (MG), lorsque le séquencement des périodes de détection est désaligné par rapport aux intervalles de mesure (MG), ou lorsque l'une des périodes de détection ne s'ajuste pas à l'intérieur de l'un des intervalles de mesure (MG).

**3.** Le dispositif électronique (10) de la revendication 2, dans lequel les un ou plusieurs processeurs sont configurés pour aligner le séquencement de la détection radiofréquence sur des périodes flexibles entre slots de liaison montante et slots de liaison descendante dans la planification des communications, lorsque les informations de configuration de réseau identifient que la planification des communications est dépourvue de cycles CDRX ou que le séquencement des périodes de détection est désaligné par rapport aux cycles CDRX.

4. Le dispositif électronique (10) de la revendication 3, dans lequel les un ou plusieurs processeurs sont configurés pour aligner le séquencement de la détection radiofréquence sur des extrémités des périodes flexibles lorsque les informations de configuration de réseau identifient que la planification des communications est dépourvue de cycles CDRX ou que le séquencement des périodes de détection est désaligné par rapport aux cycles CDRX.

5. Le dispositif électronique (10) de la revendication 3, dans lequel les un ou plusieurs processeurs sont configurés pour aligner le séquencement de la détection radiofréquence avec des débuts des périodes flexibles lorsque les informations de configuration de réseau identifient que la planification des communications est dépourvue de cycles CDRX ou que le séquencement des périodes de détection est désaligné par rapport aux cycles CDRX.

6. Le dispositif électronique (10) de la revendication 2, dans lequel les un ou plusieurs processeurs sont configurés pour aligner le séquencement de la détection radiofréquence sur un début d'un slot de liaison descendante dans la planification des communications lorsque les informations de configuration de réseau identifient que la planification des communications est dépourvue de cycles CDRX ou que le séquencement des périodes de détection est désaligné par rapport aux cycles CDRX.

7. Le dispositif électronique (10) de l'une des revendications précédentes, dans lequel les un ou plusieurs processeurs sont configurés pour reporter une période de détection d'un temps de détection nominal à un temps retardé, dans les limites d'un temps de retard maximum du temps de détection nominal, lorsque la planification des communications identifie qu'il n'y a pas de données à transférer entre le temps de détection nominal et le temps de retard maximum.

8. Un procédé de mise en œuvre d'un dispositif électronique (10) comprenant :

avec une radio (28), la transmission de signaux radiofréquence à une station de base sans fil (40) via une ou plusieurs antennes (34) pendant un premier bloc de données planifié et pendant un second bloc de données planifié séparé dans le temps du premier bloc de données planifié par un intervalle de mesure (MG) ayant une période de mesure de cellule voisine (104) ;
avec la radio (28), l'émission d'un signal de détection radiofréquence et la réception d'un signal de détection radiofréquence réfléchi via les une ou plusieurs antennes (34) pendant une période de transition (102) de l'intervalle de mesure (MG), la période de transition (102) se trouvant avant ou après la période de mesure de cellule voisine (104) de l'intervalle de mesure (MG) ;
avec un ou plusieurs processeurs, l'identification de la proximité par rapport à un objet externe (38) sur la base du signal de détection radiofréquence émis et du signal de détection radiofréquence réfléchi reçu ; et
avec les un ou plusieurs processeurs, l'ajustement d'un niveau de puissance d'émission de la radio (28) sur la base de la proximité identifiée par rapport à l'objet externe (38).

9. Le procédé de la revendication 8, comprenant en outre :
avec les un ou plusieurs processeurs, l'ajustement d'une fréquence de la radio (28) et l'ajustement d'un réglage d'accord des une ou plusieurs antennes (34) pendant la période de transition.

10. Le procédé de l'une des revendications 8 à 9, dans lequel l'émission du signal de détection radiofréquence et la réception du signal de détection radiofréquence réfléchi via les une ou plusieurs antennes (34) pendant la période de mesure (MG) comprend l'émission du signal de détection radiofréquence et la réception du signal de détection radiofréquence réfléchi pendant une période de détection qui est plus courte que la période de transition (102).

**FIG. 1**

RECEIVE NETWORK CONFIGURATION INFORMATION FROM WIRELESS BASE STATION ∿50

IDENTIFY NETWORK SETTINGS BASED ON RECEIVED NETWORK CONFIGURATION INFORMATION (E.G., WHETHER NETWORK IS CURRENTLY CONFIGURED TO UTILIZE MEASUREMENT GAPS AND/OR CDRX) ∿52

IDENTIFY CURRENT DEVICE SENSING REQUIREMENTS (E.G., SENSING ACCURACY REQUIREMENTS, DESIRED SENSING PERIODICITY, ETC.) ∿54

GENERATE SENSE TIMING BASED ON IDENTIFIED NETWORK SETTINGS AND CURRENT DEVICE SENSING REQUIREMENTS ∿56

CONVEY WIRELESS SIGNALS WITH WIRELESS BASE STATION WHILE TRANSMITTING AND RECEIVING SENSING SIGNALS USING THE GENERATED SENSE TIMING (E.G., PERFORM TIME DIVISION COMMUNICATIONS AND SENSING) ∿58

ADJUST SIGNAL TRANSMISSION AND/OR PERFORM OTHER PROCESSING OPERATIONS BASED ON TRANSMITTED AND RECEIVED SENSING SIGNALS ∿60

∿62

*FIG. 2*

ENABLE SENSING — 70

MG CONFIGURED BY NETWORK? — 72

NO — 76

YES — 74

CDRX CONFIGURED BY NETWORK AND SENSING ALIGNS WITH CDRX? — 86

— 84

NO

SENSING ALIGNS WITH MG AND FITS IN MG TRANSITION TIME? — 78

YES

NO — 92

YES — 88

YES — 80

BEGIN SENSING AT TIMES THAT MINIMIZE IMPACT TO WIRELESS DATA (E.G., FIRST DL SLOT IN TDD PATTERN, TDD FLEXIBLE PERIOD, FIRST UL SLOT AFTER FLEXIBLE PERIOD, ETC.) OR FORCE SENSING AT REGULAR PERIODICITY AND OPTIONALLY ADAPT PERIODICITY BASED ON FUTURE SCHEDULED DATA — 94

PERFORM SENSING DURING TRANSITION PERIOD OF EVERY NTH MG — 82

PEFORM SENSING AT END OF EVERY KTH CDRX CYCLE — 90

*FIG. 3*

19

**FIG. 4**

FIG. 5

130                                    132                         134

| DL SLOTS/SYMBOLS | FLEXIBLE | UL SYMBOLS/SLOTS |

TIME

TA                                     TB            TC

***FIG. 6***

*FIG. 7*

150 — FORCE SENSING AT A REGULAR PERIODICITY THAT ACHIEVES DESIRED SENSING ACCURACY

152 — AT ADVANCE TIME $T_{ADVANCE}$ BEFORE NOMINAL SENSING PERIOD AT THE REGULAR PERIODICITY (E.G., TIME TD), CHECK NETWORK CONFIGURATION INFORMATION TO DETERMINE WHETHER THERE IS SCHEDULED (GRANTED) DATA WITHIN DELAY TIME $T_{MAX\_DELAY}$ OF NOMINAL SENSING PERIOD

DATA SCHEDULED

154 —

NO DATA SCHEDULED

158 —

CONTINUE FORCING SENSING AT REGULAR PERIODICTY

156

BEGIN SENSING BETWEEN ADVANCE TIME $T_{ADVANCE}$ AND THE TIME THAT IS WITHIN DELAY TIME $T_{MAX\_DELAY}$ OF NOMINAL SENSING PERIOD (E.G., DEFER SENSING UP TO DELAY TIME $T_{MAX\_DELAY}$ TO ACCOMMODATE HIGH PRIORITY TASKS)

160

*FIG. 8*

**REFERENCES CITED IN THE DESCRIPTION**

**Patent documents cited in the description**

- US 2019200365 A1
- US 2020029345 A1